(19) Europäisches Patentamt
European Patent Office
Office européen des brevets

(11) **EP 2 208 025 B1**

(12) **EUROPÄISCHE PATENTSCHRIFT**

(45) Veröffentlichungstag und Bekanntmachung des Hinweises auf die Patenterteilung:
**04.05.2016 Patentblatt 2016/18**

(21) Anmeldenummer: **08844943.4**

(22) Anmeldetag: **01.10.2008**

(51) Int Cl.:
**G01D 1/16** *(2006.01)*      **H02P 23/12** *(2006.01)*

(86) Internationale Anmeldenummer:
**PCT/EP2008/063131**

(87) Internationale Veröffentlichungsnummer:
**WO 2009/056421 (07.05.2009 Gazette 2009/19)**

(54) **VERFAHREN UND VORRICHTUNG ZUR POSITIONSERFASSUNG DER ROTORWELLE EINER PERMANENTERREGTEN SYNCHRONMASCHINE**

METHOD AND DEVICE FOR DETECTING THE POSITION OF THE ROTOR SHAFT OF A PERMANENTLY EXCITED SYNCHRONOUS MACHINE

PROCÉDÉ ET DISPOSITIF DE DÉTECTION DE LA POSITION DE L'ARBRE DE ROTOR D'UNE MACHINE SYNCHRONE À EXCITATION PERMANENTE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **02.11.2007   DE 102007052365**

(43) Veröffentlichungstag der Anmeldung:
**21.07.2010   Patentblatt 2010/29**

(73) Patentinhaber: **Robert Bosch GmbH**
**70442 Stuttgart (DE)**

(72) Erfinder:
• **VOLLMER, Ulrich**
  **73266 Bissingen (DE)**
• **BITZER, Matthias**
  **70569 Stuttgart (DE)**

(56) Entgegenhaltungen:
**EP-A2- 0 147 754      DE-A1- 4 115 338**
**US-B1- 6 653 829**

EP 2 208 025 B1

**Beschreibung**

**Stand der Technik**

Die Erfindung betrifft ein Verfahren und Vorrichtung zur Positionserfassung der Rotorwelle einer permanenterregten Synchronmaschine.

Bei der Momentenregelung für elektrische Maschinen, beispielsweise im Bereich der hybriden Antriebstechnik, wird ein hoch aufgelöstes Winkelsignal mit entsprechender Sensorik, z.B. ein hochauflösender Resolver, benötigt. Alternativ kann auch eine niedrig auflösende Winkelsensorik verwendet werden, sofern dann zusätzlich Software-Funktionen eingesetzt werden, die aus der niedrig aufgelösten Positionsinformation ein hochaufgelöstes Winkelsignal extrahieren. Aus dem Stand der Technik sind dazu Verfahren bekannt, welche mittels einer linearen Extrapolation der vergangenen Signale entsprechend geschätzte Signale bis zur nächsten Messung liefern. Aufgrund von Fertigungstoleranzen der einzelnen Winkelsensoren können bei dieser Extrapolation zwischen den einzelnen Messwerten große Fehler entstehen. Diese Fehler können sich wiederum negativ auf die Funktionalität, sowie die Güte der Regelung auswirken.

Das Dokument US6653829 B1 offenbart ein Verfahren gemäß den Stand der Technik.

**Offenbarung der Erfindung**

Vorteile der Erfindung

Das erfindungsgemäße Verfahren mit den Merkmalen des unabhängigen Anspruchs 1 weist vorteilhaft eine hohe Genauigkeit bei der Bestimmung der Signale und eine hohe Robustheit gegenüber Störgrößen auf. Dadurch, dass die Positionsinformationen der Rotorwelle zwischen den Zeitpunkten $t_k$ und $t_{k+1}$ mittels eines Kalman-Filters, basierend auf dem erfassten, dem Drehwinkel zuordenbaren Sensorsignal und des mindestens einen Eingangssignals zu einem Zeitpunkt $t_k$ bestimmt werden, kann auf eine lineare Extrapolation verzichtet werden. Ein Entstehen von großen Fehlern / Abweichungen zwischen den einzelnen Messwerten wird vorteilhaft vermieden. Dies bietet ferner den Vorteil, dass ein niedrig aufgelöster und damit kostengünstiger Winkelsensor verwendet werden kann. Des Weiteren ist durch die Kombination des Winkelsensors mit dem Kalman-Filter eine Verbesserung der Genauigkeit der Positionsinformationen der Rotorwelle der elektrischen Maschine möglich. Auch ist es möglich, aufgrund der robusten Struktur des Kalman-Filters, dass bei dem Winkelsensor eine Toleranzaufweitung möglich ist, wodurch die Komplexität und die Fertigungskosten der Vorrichtung weiter verringert werden können.

Vorteilhafte Ausbildungen und Weiterentwicklungen der Erfindung werden durch die in den abhängigen Ansprüchen angegebenen Maßnahmen ermöglicht.

In einem bevorzugen Ausführungsbeispiel ist das dem Drehwinkel zuordenbaren Sensorsignal ein ereignisdiskretes Signal. Im Sinne der Erfindung bedeutet ereignisdiskretes, dass das Sensorsignal nicht zu festen Zeitpunkten, sondern in Abhängigkeit der Drehgeschwindigkeit der Rotorwelle auftritt.

Das verwendete Eingangssignal kann ein der elektrischen Maschine zugeführter Strangstrom $I_{abc}$, ein von der elektrischen Maschine abgegebenes Lastmoment $M_{last}$ oder eine Drehzahl $\omega$ der Rotorwelle sein.

Die zu regelnde elektrische Maschine kann eine Synchronmaschine, insbesondere eine permanenterregte Synchronmaschine sein. Eine permanenterregte Synchronmaschine weist den Vorteil auf, dass die Erregung durch Permanentmagneten erfolgt, wodurch keine Erregerwicklung vorgesehen werden muss.

In einer vorteilhaften Ausgestaltung liefert der Winkelsensor das dem Drehwinkel zuordenbare Sensorsignal mit einer Auflösung zwischen 0,01° - 10°, vorzugsweise mit einer Auflösung zwischen 0,1° - 9°, weiter vorzugsweise mit einer Auflösung zwischen 1° - 7°, weiter vorzugsweise mit einer Auflösung zwischen 2° - 6°, weiter vorzugsweise mit einer Auflösung von 5°.

In einem bevorzugen Ausführungsbeispiel kann das Kalman-Filter ein lineares Modell verwenden. Im Sinne der Erfindung bedeutet lineares Modell, dass das elektrische Motormoment als bekannte Eingangsgröße betrachtet wird und für dieses Moment ein separates Modell berücksichtigt wird. Dieses Modell für das Motormoment basiert auf den gemessenen Phasenströmen, z.B. $I_d$ und Iq, angegeben in dem aus der Literatur bekannten rotorfesten dq-Koordinaten-System, und kann z.B. mittels folgender Formel berechnet werden:

$$M_{mot} = \frac{3}{2} \cdot Z_p \cdot \left( \psi_d I_q - \psi_q I_d \right)$$

mit

$$\psi_d = L_d I_d + M_{dE} \cdot I_E$$

$$\psi_q = L_q \cdot I_q$$

ergibt sich

$$M_{mot} = \frac{3}{2} \cdot Z_p \cdot \left( M_{dE} \cdot I_E \cdot I_q + \left( L_d - L_q \right) \cdot I_d \cdot I_q \right)$$

$$M_{mot} = \frac{3}{2} \cdot Z_p \cdot \left( k_m + \Delta L \cdot I_d \right) \cdot I_q$$

wobei

$I_{dq}$ $I_{dq}$(Strangströme $I_{abc}$, Winkel $\varphi$), d.h. die Ströme $I_{dq}$ sind Funktionen der Strangströme $I_{abc}$ und des Drehwinkels $\varphi$,
$M_{mot}$ dem Motormoment,
$Z_p$ der Polpaarzahl,
$k_m$ dem Fluß,
$\Delta L$ der Induktivität, und
$I_d$, $I_q$ den Strömen entspricht.

Für die Berechnung des Motormoments sind auch andere Modellansätze denkbar, die z.B. direkt die gemessenen Strangströme $I_{abc}$ verwenden.

In einem weiteren, bevorzugten Ausführungsbeispiel kann das Kalman-Filter ein nicht-lineares Modell verwenden. Verwendet das Kalman-Filter ein nicht-lineares Modell, so spricht man auch von einem Extended Kalman-Filter. Erfindungsgemäß bedeutet nicht-lineares Modell, dass das Modell für das elektrische Motormoment $M_{mot}$ direkt in das Modell für die elektrische Maschine mit eingeht. Für diesen Fall werden dann die gemessenen Strang- oder Phasenströme als bekannte Eingangsgrößen für das Extended Kalman-Filter betrachtet.

Ferner kann in einem weiteren bevorzugten Ausführungsbeispiel das Kalman-Filter als ein Unscented Kalman-Filter oder als ein Luenberger-Beobachter ausgebildet sein.

Ein weiterer Aspekt der Erfindung betrifft eine Vorrichtung, um die Positionsinformationen der Rotorwelle einer elektrischen Maschine zu bestimmen, mit einer Winkelmesseinrichtung, um ein dem Drehwinkel zuordenbaren Sensorsignals zu erfassen, einer Messeinrichtung, um das mindestens eine Eingangssignals der elektrischen Maschine zu erfassen, einer Berechnungseinrichtung, um die Positionsinformationen der Rotorwelle aus dem erfassten Sensorsignal und dem mindestens einen Eingangssignal zu bestimmen, und/oder einem Kalman-Filter, um die Positionsinformationen der Rotorwelle zwischen zwei Positions-Erfassungen zu bestimmen.

Ferner kann die Vorrichtung noch eine Messeinrichtung für das mindestens eine Eingangssignal aufweisen, um das mindestens eine Eingangssignal mit einer ggf. hohen Abtastrate zwischen zwei Positions-Erfassungen zu bestimmen.

Kurze Beschreibung der Zeichnungen

Die Erfindung wird nachstehend anhand der beigefügten Zeichnungen beispielhaft näher erläutert. Es zeigen:

**Fig. 1**     eine schematische Darstellung eines Kalman-Filters,

**Fig. 2**     eine Prädiktor-Korrektur-Struktur,

**Figs. 3a-c**     einen Vergleich zwischen dem Kalman-Filter und einer linearen Extrapolation,

**Fig. 4**     eine schematische Darstellung eines Kalman-Filters, und

**Fig. 5**    eine schematische Darstellung eines nicht-linearen Extended Kalman-Filters.

Ausführungsformen der Erfindung

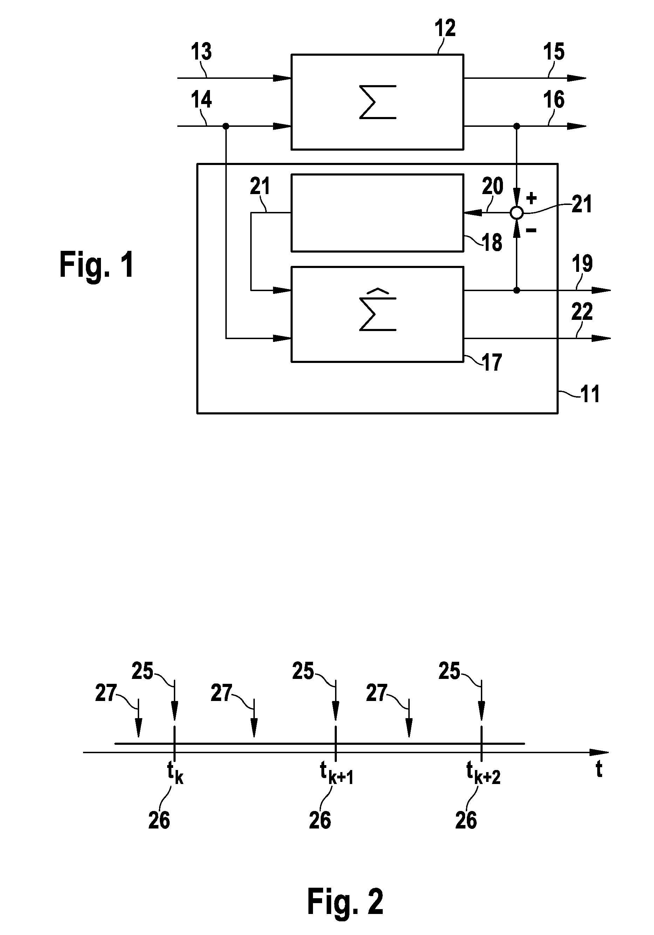

In **Fig. 1** ist ein schematischer Aufbau eines Kalman-Filters 11 dargestellt, welcher mit einem zu beobachtenden System 12 verbunden ist. Das zu beobachtende System 12 weist mindestens zwei Eingänge für die Eingangssignale 13, 14, sowie mindestens zwei Ausgänge für die Ausgangssignale 15, 16 auf. Das Eingangssignal 13 kann einem Lastmoment entsprechen, und das Eingangssignal 14 einem oder mehreren Strangströmen. Das Ausgangssignal 15 kann mindestens einem Systemzustand entsprechen, und das Ausgangssignal 16 einer Messgröße wie z.B. dem Drehwinkel $\varphi$ des Rotors. Das Kalman-Filter 11 besteht aus einem Simulatoranteil 17 und einem Korrekturanteil 18. Der Simulatoranteil 17 stellt ein dynamisches Parallelmodell des zu beobachtenden Systems 12 dar. Der Simulatoranteil 17 wird mit dem gleichen Eingangssignal 14 beaufschlagt, wie das zu beobachtende System 12. Der Simulatoranteil 17 gibt zwei Signale aus, ein rekonstruiertes Ausgangssignal 19, das einer geschätzten Messgröße entspricht, und ein rekonstruiertes Ausgangssignal 22, das den geschätzten Systemzuständen entspricht. Sind die Parameter im Parallelmodell und dem zu beobachtenden System 12 identisch, dann ist das rekonstruierte Ausgangssignal 19 gleich dem Ausgangssignal 16 des zu beobachtenden Systems 12. Da das Parallelmodell im Simulatoranteil 17 aber nicht exakt das zu beobachtende System 12 abbildet, ergibt sich ein Fehlersignal 20 zwischen dem rekonstruierten Ausgangssignal 19 und dem Ausgangssignal 16, welches über eine Subtraktion aus dem rekonstruierten Ausgangssignal 19 und dem Ausgangssignal 16 berechnet wird. Dieses Fehlersignal 20 wird nun dem Korrekturanteil 18 zugeführt. Der Korrekturanteil 18 berechnet ein Korrektursignal 21, das wiederum dem Simulatoranteil 17 zugeführt wird. Durch das Korrektursignal 21 kann das rekonstruierte Ausgangssignal 19 und das rekonstruierte Ausgangssignal 22 des Simulatoranteils 17 beeinflusst werden. Dies geschieht solange, bis das Fehlersignal 20 gegen einen Grenzwert konvergiert.

Nachfolgend wird der Entwurf des Kalman-Filters beschrieben. Das Kalman-Filter wird in zwei Schritten entworfen. Zunächst wird ein physikalisch / dynamisches Modell (Simulatoranteil 17) des mechanischen Anteils (Rotor) der elektrischen Maschine erstellt. Der Drehwinkel $\varphi$ ergibt sich durch Integration der Winkelgeschwindigkeit $\omega$, die mittels des Drallsatzes formuliert wird. Da das am Rotor anliegende Lastmoment $M_{last}$ nicht bekannt ist, wird hierfür ein Störgrößenmodell angesetzt.

Entwurfsmodell für Filterentwurf (inklusive Störgrößenmodell für $M_{last}$):

$$\dot{\varphi} = \omega$$

$$\dot{\omega} = \frac{1}{J} \cdot \left( M_{mot} - D\omega - M_{last} \right)$$

$$\dot{M}_{last} = 0$$

Das Modell lässt sich in Zustandsdarstellung wie folgt angeben, wobei der Zustandsvektor x die Systemzustände ($\varphi$ = Winkel, $\omega$ = Drehzahl/Winkelgeschwindigkeit, $M_{last}$ = Lastmoment) repräsentiert:

$$\text{Mit } x_1 = \varphi, \, x_2 = \omega, \, x_3 = M_{last}, \text{ und } x = [x_1, \, x_2, \, x_3]^T$$

$$\dot{x} = \underbrace{\begin{pmatrix} 0 & 1 & 0 \\ 0 & -D/J & -1/J \\ 0 & 0 & 0 \end{pmatrix}}_{=:A} x + \underbrace{\begin{pmatrix} 0 \\ 1/J \\ 0 \end{pmatrix}}_{=:b} M_{mot}$$

$$y = \underbrace{\begin{pmatrix} 1 & 0 & 0 \end{pmatrix}}_{=:c^T} x$$

$$\dot{x} = Ax + bM_{mot}(\varphi, I_d, I_q)$$

$$y = c^T x$$

Mit Blick auf die Umsetzung in einem Steuergerät wird das Modell in diskreter Zustandsform angegeben, wobei die Variable *u* für die Ausprägungsform des linearen Kalman-Filters das Motormoment $M_{mot}$ repräsentiert:

$$x_k = A_d x_{k-1} + b_d u_{k-1} + w_{k-1}$$

$$y_k = c^T x_k + v_{k-1}$$

wobei

$w_k$ dem Prozessrauschen, und
$v_k$ dem Messrauschen entspricht.

**Fig. 2** stellt die unter Berücksichtigung der ereignisdiskreten Messung aus dem Kalman-Filter erhaltene Prädiktor-Korrektur-Struktur dar. Die Korrektur 25 wird immer dann durchgeführt, wenn ein neuer Messwert vorliegt. Somit hängt die Ausführungsfrequenz der Korrektur 25 von der Drehzahl des Motors, bzw. der Rotorwelle ab. Zwischen zwei Messzeitpunkten 26, beispielsweise zu den Zeitpunkten $t_k$ und $t_{k+1}$ oder $t_{k+1}$ und $t_{k+2}$ erfolgt eine durch das Eingangssignal 14 getriebene Prädiktion 27 mit Hilfe des im Simulationsanteil 17 abgebildeten physikalischen Modells des Rotors. Hierzu wird das in diskreter Zustandsform angegebene Modell rekursiv als Online-Simulator in Abhängigkeit des hoch abgetasteten Eingangssignals 14 und mit einer für die Anwendung nötigen hohen Abtastrate berechnet. Somit steht zu jedem Zeitpunkt entweder ein realer Messwert oder ein auf dem Kalman-Filter basierender Schätzwert zur Verfügung.

Während der Prädiktion wird der Zustand $\hat{x}_k^-$ wie folgt unter Zuhilfenahme des geschätzten Zustandes $\hat{x}_{k-1}$ aus dem vorherigen Korrekturschritt k-1 oder eines vorangegangenen rekursiven Rechenschritts, der Zustandsübergangsmatrix $A_d$ und eines Steuereingriffes $b_d u_{k-1}$ (*a priori*-Schätzung) berechnet:

$$\hat{x}_k^- = A_d \cdot \hat{x}_{k-1}^+ + b_d u_{k-1}$$

Der Steuereingriff erfolgt über die Messung des Eingangssignals 14 mit einer auf die rekursive Berechnung der Prädiktionsformel abgestimmten hohen Abtastrate.

Die für die Prädiktion erwartete Fehlerkovarianzmatrix $P_k^-$ errechnet sich aus:

$$P_k^- = A_d \cdot P_{k-1}^+ \cdot A_d^T + Q$$

wobei Q die Kovarianzmatrix für das Prozessrauschen darstellt und damit einem Modellfehler entspricht, der die Abweichung des Modellverhaltens von der Realität beschreibt.

Die beschriebenen beiden Prädiktionsschritte werden solange auf Basis einer vorgegebenen konstanten Abtastschrittweite rekursiv berechnet, vgl. 27 in Fig. 2, bis eine neue Messung in Abhängigkeit der Positionsflanken des niedrig auflösenden Winkelgebers neu detektiert wird, vgl. 25, 26 in Fig. 2.

An den Messzeitpunkten 26 wird eine Korrektur der Prädiktion durchgeführt. Die Gewichtung der Korrektur gegenüber der Prädiktion bestimmt der sogenannte Kalman-Gain entsprechend der Prädiktionsfehlerkovarianzmatrix $P_k^-$ und der Messfehlerkovarianzmatrix R:

$$K_k = P_k^- c^T \left( c P_k^- c^T + R \right)^{-1}$$

Der Innovationsschritt verknüpft nun die ereignisdiskrete Messung $y_k$ und die rekursiv mit fester Abtastschrittweite berechnete Prädiktion $\hat{x}_k^-$ gewichtet zu einer neuen (*a posteriori*-) Schätzung:

$$\hat{x}_k^+ = \hat{x}_k^- + K_k \left( y_k - c^T \hat{x}_k^- \right)$$

Die dieser Schätzung zugehörige Fehlerkovarianzmatrix lautet z.B.

$$P_k^+ = \left( I - K_k c^T \right) P_k^-$$

wobei *I* der Einheitsmatrix entspricht. Die Gleichung zur Bestimmung der a posteriori Fehlerkovarianzmatrix kann auch in anderen Ausprägungsformen durchgeführt werden, alternativ kann sie z.B. mit der etwas aufwändigeren und aus der Literatur bekannten Joseph-Form berechnet werden. Beide a posteriori Schätzwerte bilden nun die Grundlage für einen erneuten Durchlauf zur Schätzung des nächsten Systemzustands und der Ablauf beginnt von vorn.

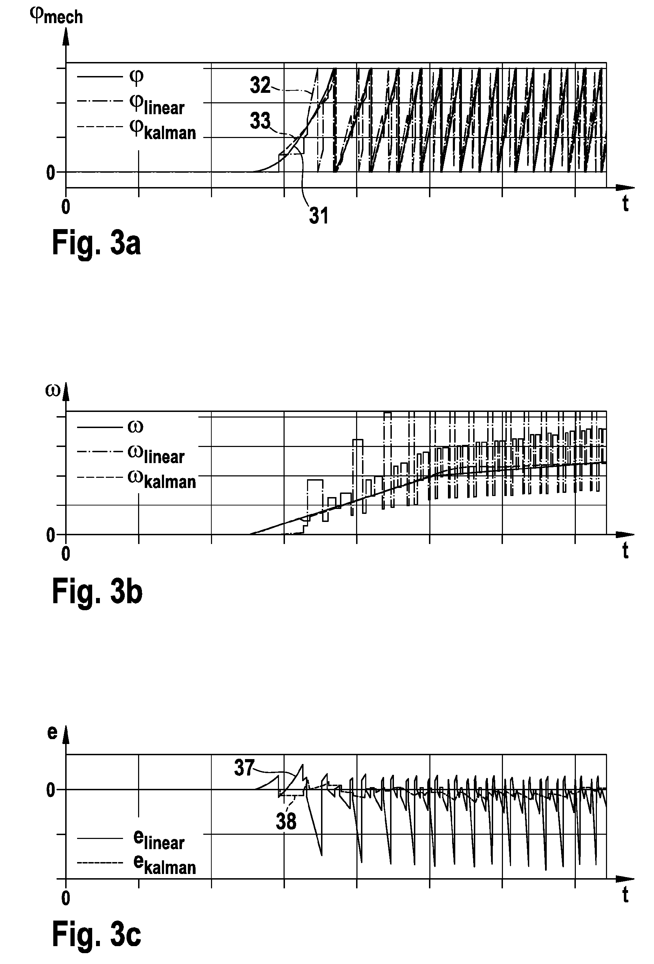

Die in **Fig. 3** dargestellte Verläufe zeigen einen Vergleich zwischen dem Kalman-Filter und dem bisherigen auf linearer Extrapolation basierenden Algorithmus, wobei auf der Abszisse die Zeit aufgetragen ist. In **Fig. 3a** ist der wahre Winkel φ 31 des Motors, der durch lineare Extrapolation berechnete Winkel φ$_{linear}$ 32, und der mittels des Kalman-Filter geschätzte Winkel φ$_{kalman}$ 33 aufgetragen. Dabei ist zu erkennen, dass der geschätzte Winkel φ$_{kalman}$ 33 im Wesentlichen dem wahren Winkel φ 31 des Motors mit einer geringen Abweichung folgt, wohingegen der durch lineare Extrapolation berechnete Winkel φ$_{linear}$ 32 teilweise sehr stark von dem wahren Winkel φ 31 des Motors abweicht. Selbst nach einem Einschwingzeitraum bleibt eine nicht unerhebliche Abweichung zwischen dem durch lineare Extrapolation berechneten Winkel φ$_{linear}$ 32 und dem wahren Winkel φ 31 des Motors bestehen. Die Abweichung zwischen dem geschätzten Winkel φ$_{kalman}$ 33 und dem wahren Winkel φ 31 des Motors nimmt nach einem Einschwingzeitraum bis auf eine geringe verbleibende Abweichung ab.

**Fig. 3b** stellt die Abweichungen zwischen der wahren Drehzahl ω 34 des Motors, der durch lineare Extrapolation berechneten Drehzahl ω$_{linear}$ 35, und der mittels des Kalman-Filters geschätzten Drehzahl ω$_{kalman}$ 34 dar. Während sich die mittels des Kalman-Filters geschätzte Drehzahl ω$_{kalman}$ 34 der wahren Drehzahl ω 34 des Motors nach einem Einschwingvorgang sehr gut annähert, kann bei der durch lineare Extrapolation berechneten Drehzahl ω$_{linear}$ 35 keine Konvergenz zu der wahren Drehzahl ω 34 des Motors festgestellt werden.

Der in **Fig. 3c** dargestellte Verlauf stellt den Schätzfehler e$_{linear}$ 37 bzw. die Abweichung zwischen dem wahren Winkel φ 31 des Motors und dem durch lineare Extrapolation berechnete Winkel φ$_{linear}$ 32 dar, sowie den Schätzfehler e$_{kalman}$ 38 zwischen dem wahren Winkel φ 31 des Motors und dem mittels des Kalman-Filters geschätzten Winkel φ$_{kalman}$ 33. Auch hier ist klar zu erkennen, dass der Schätzfehler e$_{kalman}$ 38 im Gegensatz zu dem Schätzfehler e$_{linear}$ 37 einerseits wesentlich geringer ist, und andererseits sich mit der Laufzeit des Systems auch noch verkleinert.

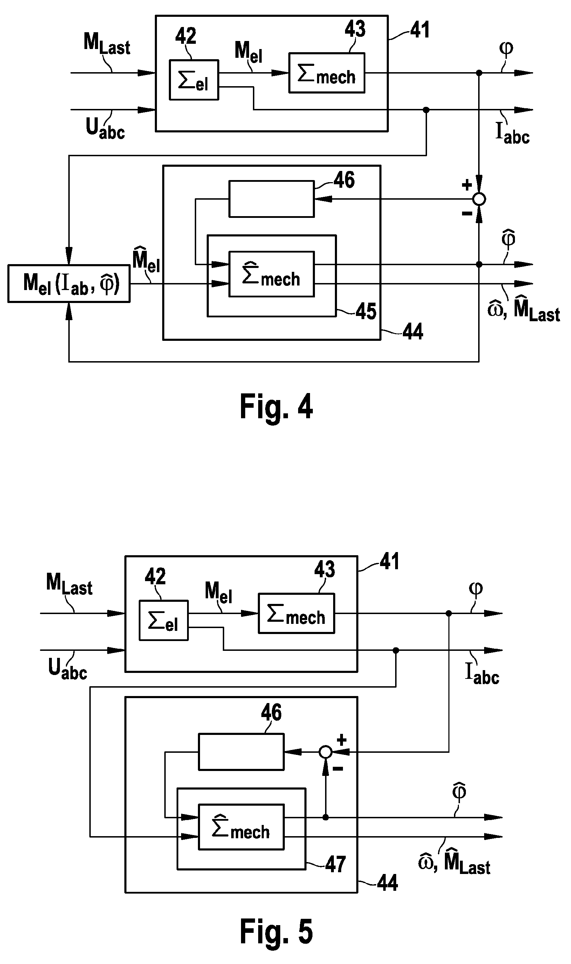

**Fig. 4** zeigt eine schematische Darstellung eines linearen Kalman-Filters 44. Der Unterschied zu dem in **Fig. 1** dargestellten Aufbau besteht darin, dass die elektrische Maschine 41 in einen elektrischen Anteil 42 und einen mechanischen Anteil 43 aufgeteilt wird. Der mechanische Anteil 43 wird durch einen Simulatoranteil 45 abgebildet. Der Simulatoranteil 45 wird wie oben beschrieben durch den Korrekturanteil 46 korrigiert. Anstelle den Simulatoranteil 45 direkt mit dem Motormoment $M_{mot}$ bzw. dem elektrischen Moment M$_{el}$ zu beaufschlagen wird in **Fig. 4** das Motormoment der oben hergeleiteten Formel $M_{mot} = \frac{3}{2} \cdot Z_p \cdot \left( k_m + \Delta L \cdot I_d \right) \cdot I_q$ aus den Strangströmen und dem geschätzten Winkel berechnet und anschließend in den Simulatoranteil 45 eingegeben.

In **Fig. 5** ist eine schematische Darstellung eines nicht-linearen Extended Kalman-Filters 44 dargestellt. Gleiche Bezugszeichen bezeichnen dabei gleiche Funktionseinheiten. Der Unterschied zwischen dem in **Fig. 4** und **Fig. 5** dargestellten Modellen besteht darin, dass das Modell für das Motormoment in den Simulatoranteil 47 integriert wurde und nun die Strangströme als Eingangsgrößen für das Kalman-Filter verwendet werden. Dadurch erhöht sich zwar die Komplexität des Simulatoranteils 47, dieser kann jedoch nun auf die unterschiedlichsten Ausprägungsformen von permanenterregten Synchronmaschinen mit entsprechenden stark nicht-linearen Modellansätzen für das Motormoment sowie u.a. auch auf nicht permanenterregte Synchronmaschinen angewendet werden.

**Patentansprüche**

1. Verfahren zur Bestimmung von Positionsinformationen der Rotorwelle einer elektrischen Maschine (12), anhand eines dem Drehwinkel zuordenbaren Sensorsignals und mindestens einem Eingangssignals (13, 14) der elektrischen Maschine (12), wobei die Bestimmung durch die folgenden Schritte erfolgt: Erfassen eines dem Drehwinkel zuordenbaren Sensorsignals und des mindestens einem Eingangssignals (13, 14) zu einem Zeitpunkt tk; Bestimmen der Positionsinformationen der Rotorwelle zu einem Zeitpunkt tk aus dem erfassten Sensorsignal und dem mindestens einen Eingangssignal (13, 14); Erfassen eines dem Drehwinkel zuordenbaren Sensorsignals und des mindestens einem Eingangssignals (13, 14) zu einem Zeitpunkt $t_{k+1}$; Bestimmen der Positionsinformationen der Rotorwelle zu einem Zeitpunkt $t_{k+1}$ aus dem erfassten Sensorsignal und dem mindestens einen Eingangssignal (13, 14); wobei die Positionsinformationen der Rotorwelle zwischen den Zeitpunkten $t_k$ und $t_{k+1}$ mittels eines Kalman-Filters (11, 44), basierend auf dem erfassten, dem Drehwinkel zuordenbaren Sensorsignal und dem mindestens einen Eingangssignal (13, 14), zu einem Zeitpunkt $t_k$ bestimmt werden, **dadurch gekennzeichnet, dass** zwischen zwei Zeitpunkten $t_k$ und $t_{k+1}$ eine durch das Eingangssignal 14 getriebene Prädiktion (27) mit Hilfe des im Simulationsanteil (17) abgebildeten physikalischen Modells des Rotors erfolgt, wobei eine Korrektur (25) immer dann durchgeführt wird, wenn ein neuer Messwert vorliegt, wodurch die Ausführungsfrequenz der Korrektur (25) von der Drehzahl des Motors, bzw. der Rotorwelle abhängt, wobei das Eingangssignal (13, 14) ein Strangstrom, ein Lastmoment, ein elektrisches Motormoment, oder eine Drehzahl ist.

2. Verfahren nach Anspruch 1, **dadurch gekennzeichnet, dass** das dem Drehwinkel zuordenbaren Sensorsignal ein ereignisdiskretes Signal ist.

3. Verfahren nach mindestens einem der vorangegangenen Ansprüche, **dadurch gekennzeichnet, dass** die elektrische Maschine (12) eine Synchronmaschine, insbesondere eine permanenterregte Synchronmaschine ist.

4. Verfahren nach mindestens einem der vorangegangenen Ansprüche, **dadurch gekennzeichnet, dass** das dem Drehwinkel zuordenbare Sensorsignal eine Auflösung zwischen 0,01° - 10° hat.

5. Verfahren nach mindestens einem der vorangegangenen Ansprüche, **dadurch gekennzeichnet, dass** das Kalman-Filter (11, 44) ein lineares Modell (45) oder ein nicht-lineares Modell (47) anwendet.

6. Verfahren nach mindestens einem der vorangegangenen Ansprüche, **dadurch gekennzeichnet, dass** anstelle des mindestens einen Eingangssignals (13, 14) der elektrischen Maschine (12) mindestens ein Ausgangssignal (15, 16) der elektrischen Maschine (12) verwendet wird.

7. Computerprogramm, das alle Schritte eines Verfahrens nach einem der Ansprüche 1 - 6 ausführt, wenn es auf einem Rechengerät abläuft.

8. Computerprogrammprodukt mit Programmcode, der auf einem maschinenlesbaren Träger gespeichert ist, zur Durchführung des Verfahrens nach einem der Ansprüche 1 - 6, wenn das Programm auf einem Computer oder Steuergerät ausgeführt wird.


**Claims**

1. Method for determining information on the position of the rotor shaft of an electric machine (12), on the basis of the sensor signal which can be assigned to the rotational angle, and at least one input signal (13, 14) of the electric machine (12), wherein the information is obtained by means of the following steps: detecting a sensor signal which can be assigned to the rotational angle, and the at least one input signal (13, 14) at a time tk; obtaining information on the position of the rotor shaft at a time tk from the detected sensor signal and the at least one input signal (13, 14); detecting a sensor signal which can be assigned to the rotational angle and the at least one input signal (13, 14) at a time $t_{k+1}$; determining the information on the position of the rotor shaft at a time $t_{k+1}$ from the detected sensor signal and the at least one input signal (13, 14); wherein the information on the position of the rotor shaft is obtained between the times $t_k$ and $t_{k+1}$ by means of a Kalman filter (11, 44) on the basis of the detected sensor signal which can be assigned to the rotational angle, and the at least one input signal (13, 14) at a time $t_k$, **characterized in that** between two times $t_k$ and $t_{k+1}$ a prediction (27) which is driven by the input signal (14) is carried out using the physical model of the rotor which is produced in the simulation component (17), wherein a correction (25) is always carried out whenever a new measured value is present, as a result of which the execution frequency of the correction (25) depends on the rotational speed of the engine and/or of the rotor shaft, wherein the input signal (13, 14) is a string current, a load torque, an electric engine torque or a rotational speed.

2. Method according to Claim 1, **characterized in that** the sensor signal which can be assigned to the rotational angle is an event-discrete signal.

3. Method according to at least one of the preceding claims, **characterized in that** the electric machine (12) is a synchronous machine, in particular a permanently excited synchronous machine.

4. Method according to at least one of the preceding claims, **characterized in that** the sensor signal which can be assigned to the rotational angle has a resolution between 0.01° - 10°.

5. Method according to at least one of the preceding claims, **characterized in that** the Kalman filter (11, 44) applies a linear model (45) or a nonlinear model (47).

6. Method according to at least one of the preceding claims, **characterized in that** at least one output signal (15, 16) of the electric machine (12) is used instead of the at least one input signal (13, 14) of the electric machine (12).

7. Computer program which executes all the steps of a method according to one of Claims 1 - 6 when it runs on a computing device.

8. Computer program product with program code which is saved on a machine-readable carrier, for carrying out the method according to one of Claims 1 - 6 when the program is executed on a computer or control device.


**Revendications**

1. Procédé de détermination d'informations de position de l'arbre de rotor d'une machine électrique (12) sur la base d'un signal de capteur pouvant être associé à l'angle de rotation et d'au moins un signal d'entrée (13, 14) de la machine électrique (12), dans lequel la détermination s'effectue par les étapes consistant à : détecter un signal de capteur pouvant être associé à l'angle de rotation et l'au moins un signal d'entrée (13, 14) à un instant $t_k$ ; déterminer les informations de position de l'arbre de rotor à un instant $t_k$ à partir du signal de capteur détecté et de l'au moins un signal d'entrée (13, 14) ; détecter un signal de capteur pouvant être associé à l'angle de rotation et l'au moins un signal d'entrée (13, 14) à un instant $t_{k+1}$ ; déterminer les informations de position de l'arbre de rotor à un instant $t_{k+1}$ à partir du signal de capteur détecté et de l'au moins un signal d'entrée (13, 14) ; dans lequel les informations de position de l'arbre de rotor sont déterminées entre les instants $t_k$ et $t_{k+1}$ au moyen d'un filtre de Kalman (11, 44) sur la base du signal de capteur détecté pouvant être associé à l'angle de rotation et de l'au moins un signal d'entrée (13, 14) à un instant $t_k$, **caractérisé en ce qu'**une prédiction (27) déterminée entre deux instants $t_k$ et $t_{k+1}$ par le signal d'entrée 14 est effectuée à l'aide du modèle physique de rotor représenté dans la partie de simulation (17), dans lequel une correction (25) n'est toujours effectuée que lorsqu'une nouvelle valeur de mesure est présente, la fréquence d'exécution de la correction (25) dépendant de la vitesse de rotation du moteur ou de l'arbre de rotor, dans lequel le signal d'entrée (13, 14) est un courant de phase, un couple de charge, un couple de moteur électrique ou une vitesse de rotation.

2. Procédé selon la revendication 1, **caractérisé en ce que** le signal du capteur pouvant être associé à l'angle de rotation est un signal à événements discrets.

3. Procédé selon au moins l'une des revendications précédentes, **caractérisé en ce que** la machine électrique (12) est une machine synchrone, et plus particulièrement, une machine synchrone à excitation permanente.

4. Procédé selon au moins l'une des revendications précédentes, **caractérisé en ce que** le signal de capteur pouvant être associé à l'angle de rotation présente une résolution comprise entre 0,01° et 10°.

5. Procédé selon au moins l'une des revendications précédentes, **caractérisé en ce que** le filtre de Kalman (11, 44) utilise un modèle linéaire (45) ou un modèle non linéaire (47).

6. Procédé selon au moins l'une des revendications précédentes, **caractérisé en ce qu'**au lieu de l'au moins un signal d'entrée (13, 14) de la machine électrique (12), au moins un signal de sortie (15, 16) de la machine électrique (12) est utilisé.

7. Programme d'ordinateur qui met en oeuvre toutes les étapes d'un procédé selon l'une quelconque des revendications 1-6 lorsqu'il est exécuté sur un appareil de calcul.

8. Produit de programme d'ordinateur comportant un code de programme qui est stocké sur un support lisible par machine pour mettre en oeuvre le procédé selon l'une quelconque des revendications 1-6 lorsque le programme est exécuté sur un ordinateur ou un appareil de commande.

**Fig. 1**

**Fig. 2**

Fig. 3a

Fig. 3b

Fig. 3c

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6653829 B1